# EUROPEAN PATENT SPECIFICATION

(11) **EP 3 733 502 B1**
(45) Date of publication and mention of the grant of the patent: **06.04.2022**
(21) Application number: 18906952.9
(22) Date of filing: 21.11.2018
(51) Int. Cl.: B63J 99/00, B63J 3/02, H02P 9/04, B63H 21/20

(54) **POWER GENERATION SYSTEM FOR SHIPS**
ENERGIEERZEUGUNGSSYSTEM FÜR SCHIFFE
SYSTÈME DE GÉNÉRATION D'ÉNERGIE POUR NAVIRES

(30) Priority: 21.02.2018 JP 2018029088
(43) Date of publication of application: 04.11.2020
(73) Proprietor: Mitsubishi Shipbuilding Co., Ltd., Yokohama-shi Kanagawa 220-8401 (JP)
(72) Inventor: KUROIWA, Ryota, Tokyo 108-8215 (JP); YAMATO, Kuniaki, Tokyo 108-8215 (JP)
(74) Representative: Henkel & Partner mbB
(86) International application number: PCT/JP2018/043058
(87) International publication number: WO 2019/163228

(56) References cited:
- CN-A- 107 636 928
- CN-B- 103 708 015
- JP-A- 2004 345 628
- JP-A- 2010 116 070
- JP-A- 2010 141 998
- JP-A- 2011 087 348
- JP-A- 2012 153 342
- JP-A- 2013 043 485
- KR-A- 20160 112 627
- US-A1- 2014 132 064

## Description

### Technical Field

The present invention relates to a power generation system for ships.

### Background Art

In a ship, such as a ferry, in order to supply power to inboard facilities, a plurality (for example, three) of generators are mounted in view of redundancy or needed maximum power, and each generator is operated such that an operation time becomes uniform. The maximum power is needed, for example, in a case where equipment, such as a bow thruster, is used during entry and departure. In this case, the three generators are operated under a high load. On the other hand, during normal sailing, power is supplied to the interior of the ship using two generators, and a remaining one generator is made on standby.

Normally, since the generator is designed such that fuel efficiency is good with a rated output, no problem occurs with fuel efficiency during entry and departure. However, since the rated power of the generator is set based on power needed during entry and departure, two generators are operated under a low load (for example, 60% of the rated output) during normal sailing, and there is a problem in that fuel efficiency is deteriorated. For this reason, in order to operate the generators under a high load to restrain deterioration of fuel efficiency even during normal sailing, it is desirable to use a generator having a small rated output and a secondary battery in combination.

PTL 1 discloses an electric motor system that includes a generator and a secondary battery, and can be operated with high efficiency even though requested torque and a requested rotation speed to a rotation output are changed.

PTL 2 discloses a double-diesel generating set and lithium battery hybrid power ship structure which comprises an electric propulsion system. The electric propulsion system comprises two diesel generating sets, a lithium battery pack and an electric motor, wherein the two diesel generating sets, the lithium battery pack and the electric motor are connected with a direct-current bus, the electric motor is also connected with a propeller, the direct-current bus is also connected with shore power, and a power controller receives power signals of the electric motor and electrical charge status signals of the lithium battery pack and sends power control signals to the two diesel generating sets and a DC/DC convertor.

PTL 3 discloses a ship and a power management method of the ship. The ship comprises: a power grid; at least one generator that is connected to the power grid and supplies electricity to the power grid; a high-capacity battery connected to the power grid, and charged by receiving the electricity from the power grid or discharged to supply power to the power grid; a plurality of load components connected to the power grid; and a controller for receiving generator load information from the at least one generator, sensing a voltage of the power grid to calculate a current load and an average load, and controlling the generator to bear the average load and the high-capacity battery to bear a difference load between the current load and the average load.

PTL 4 discloses a power system for dynamic positioning of a vessel. The power system reduces fuel consumption, carbon buildup deposits and the risk of cylinder bore glazing while in combustion engine driven generators and provides an adequate protection against blackouts. The power system includes first and second combustion engine driven generators, a battery unit, and a converter unit arranged to provide power to the vessel from the battery unit. A first operational state of the power system in which the first combustion engine driven generator is arranged to deliver power to the vessel, and a second operational state, in which the first generator is subject to a fault, the second combustion engine driven generator arranged to deliver power to the vessel, and the converter unit is arranged to deliver power to the vessel during transition between the states.

### Citation List

### Patent Literature

[PTL 1] Japanese Unexamined Patent Application Publication No. 2003-189690
[PTL 2] CN 103 708 015 B
[PTL 3] CN 107 636 928 A
[PTL 4] US 2014/132064 A1

### Summary of Invention

### Technical Problem

However, in PTL 1, there is no description that deterioration of fuel efficiency is suppressed using the secondary battery. Accordingly, even though the electric motor system described in PTL 1 is applied to a ship, it is hard to suppress deterioration of the fuel efficiency of the generators during normal sailing of the ship.

Therefore, an object of the invention is to suppress deterioration of fuel efficiency of generators during normal sailing using a secondary battery in a ship.

### Solution to Problem

Accordingly, there is provided a power generation system for ships as set out in independent claim 1. Advantageous developments are defined in the dependent claims.

A power generation system for ships of the invention includes a plurality of generators that supply power to the interior of a ship, a secondary battery that stores power output from the plurality of generators and supplies the stored power to the interior of the ship, and a control device that supplies power to the ship using a first generator among the plurality of generators and the secondary battery during normal sailing of the ship. The control device charges the secondary battery so as to enable output of power equivalent to that of the first generator during entry and departure of the ship.

With this structure, it is possible to provide power needed for the ship using a generator operated under a high load and the secondary battery. Accordingly, it is possible to improve the fuel efficiency of the generators.

It is preferable that the secondary battery has capacity equal to or greater than 90% and equal to or less than 120% of a rated power of the first generator.

With this structure, the secondary battery can be used in the same manner as the generators. Accordingly, it is possible to improve the fuel efficiency of the generators.

It is preferable that, during normal sailing of the ship, the control device supplies power to the interior of the ship using the first generator and a second generator among the plurality of generators, and charges the secondary battery using a third generator among the plurality of generators.

With this structure, during normal sailing, it is possible to charge the secondary battery while operating the respective generators under a high load. Accordingly, it is possible to improve fuel efficiency.

It is preferable that, during normal sailing of the ship, the control device supplies power to the interior of the ship using the first generator and a second generator among the plurality of generators, and charges the secondary battery using surplus power out of power supplied to the interior of the ship.

With this structure, during normal sailing, it is possible to charge the secondary battery while operating the respective generators under a high load. Accordingly, it is possible to improve fuel efficiency.

It is preferable that the power generation system further includes a shaft generator provided in a rotary shaft of propulsion equipment.

With this structure, it is possible to provide power needed for the ship using a generator operated under a high load, the secondary battery, and the shaft generator. Accordingly, it is possible to improve the fuel efficiency of the generators.

It is preferable that, during normal sailing of the ship, the control device supplies power to the interior of the ship using the first generator and a second generator among the plurality of generators and charges the secondary battery using a third generator among the plurality of generators and the shaft generator.

With this structure, during normal sailing, it is possible to charge the secondary battery while operating the respective generators under a high load. Accordingly, it is possible to improve the fuel efficiency of the generators.

It is preferable that, during normal sailing of the ship, the control device supplies power to the interior of the ship using the first generator and the shaft generator, and charges the secondary battery using a second generator among the plurality of generators.

With this structure, during normal sailing, it is possible to charge the secondary battery while operating the respective generators under a high load. Accordingly, it is possible to improve the fuel efficiency of the generators.

It is preferable that, during normal sailing of the ship, the control device supplies power to the interior of the ship using the first generator and a second generator among the plurality of generators, charges the secondary battery using a third generator among the plurality of generators, and supplies power to the shaft generator using the secondary battery.

With this structure, during normal sailing, it is possible to charge the secondary battery while operating the respective generators under a high load, and to supply to power to the shaft generator using the secondary battery. Accordingly, it is possible to improve the fuel efficiency of the generators. Since it is possible to support rotation of a propeller using the secondary battery, it is possible to reduce fuel consumption of a main engine.

It is preferable that, during normal sailing of the ship, the control device supplies power to the interior of the ship using the first generator and a second generator among the plurality of generators, and charges the secondary battery using surplus power out of power supplied to the interior of the ship and the shaft generator.

With this structure, during normal sailing, it is possible to charge the secondary battery while operating the respective generators under a high load. Accordingly, it is possible to improve the fuel efficiency of the generators.

It is preferable that, during normal sailing of the ship, the control device supplies power to the interior of the ship using the first generator and a second generator among the plurality of generators, charges the secondary battery using surplus power out of power supplied to the interior of the ship, and supplies power to the shaft generator using the secondary battery.

With this structure, during normal sailing, it is possible to charge the secondary battery while operating the respective generators under a high load. Accordingly, it is possible to improve the fuel efficiency of the generators.

### Brief Description of Drawings

Fig. 1 is a block diagram showing the configuration of a power generation system according to according to a first embodiment of the invention.
Fig. 2 is a flowchart showing an example of the operation of the power generation system according to the first embodiment of the invention during entry and departure.
Fig. 3 is a flowchart showing the operation of the power generation system according to the first embodiment of the invention during normal sailing of a ship.
Fig. 4 is a block diagram showing the configuration of a power generation system according to a modification example of the first embodiment of the invention.
Fig. 5 is a flowchart showing an example of the operation of the power generation system according to the modification example of the first embodiment of the invention during normal sailing of a ship.
Fig. 6 is a block diagram showing the configuration of a power generation system according to a second embodiment of the invention.
Fig. 7 is a flowchart showing an example of the operation of the power generation system of according to the second embodiment of the invention during normal sailing of a ship.
Fig. 8 is a flowchart showing an example of the operation of the power generation system according to the second embodiment of the invention during normal sailing of the ship.
Fig. 9 is a flowchart showing an example of the operation of the power generation system according to the second embodiment of the invention during normal sailing of the ship.
Fig. 10 is a block diagram showing the configuration of a power generation system according to a modification example of the second embodiment of the invention.
Fig. 11 is a flowchart showing an example of the operation of the power generation system according to the modification example of the second embodiment of the invention during normal sailing of a ship.
Fig. 12 is a flowchart showing an example of the operation of the power generation system according to the modification example of the second embodiment of the invention during normal sailing of the ship.

### Description of Embodiments

A preferred embodiment of a power generation system for ships according to the invention will be described below in detail referring to the accompanying drawings. Note that the invention is not limited to the embodiment, and in a case where there are a plurality of embodiments, combinations of the embodiments still fall within the scope of the invention.

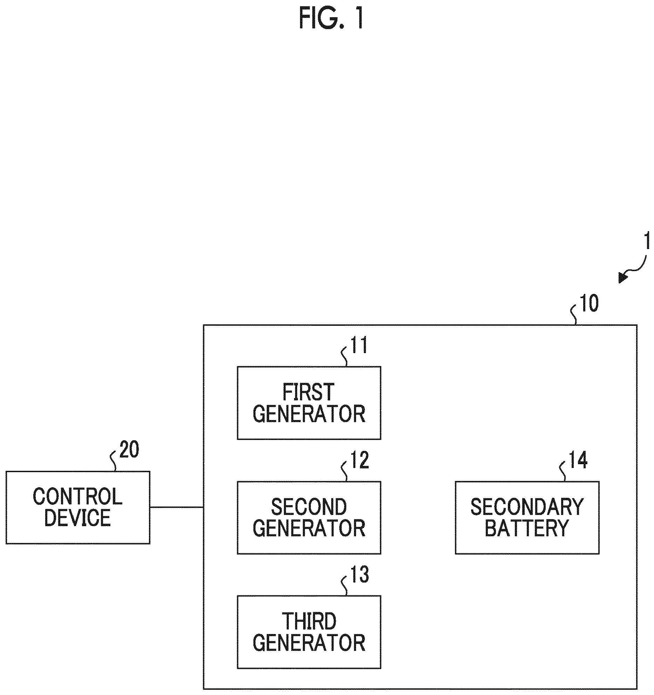

The configuration of a power generation system according to a first embodiment of the invention will be described in connection with Fig. 1. Fig. 1 is a block diagram showing the configuration of the power generation system according to the first embodiment of the invention.

As shown in Fig. 1, a power generation system 1 includes a main generator 10 and a control device 20. The main generator 10 has a first generator 11, a second generator 12, a third generator 13, and a secondary battery 14. Although the power generation system 1 has three generators, this is for illustration, and is not intended to limit the invention. The power generation system 1 may have more generators.

The first generator 11, the second generator 12, and the third generator 13 are generators that are provided in the interior of a ship. The first generator 11, the second generator 12, and the third generator 13 supply power to respective facilities that are provided in the interior of the ship. It is preferable that the first generator 11, the second generator 12, and the third generator 13 have the same rated power. In this case, the rated output of each of the first generator 11, the second generator 12, and the third generator 13 is, for example, 1000 kW. Note that the rated output of each of the first generator 11, the second generator 12, and the third generator 13 may be set according to power needed during entry and departure of the ship.

The secondary battery 14 is provided in the interior of the ship and supplies power to respective facilities that are provided in the interior of the ship. The secondary battery 14 supplies, for example, power, which is insufficient for power supplied to the interior or the ship using one generator operated under a high load (for example, 90%) out of power needed in the interior of the ship, to the interior of the ship. The secondary battery 14 is charged using the first generator 11, the second generator 12, and the third generator 13. The rated power of the secondary battery 14 is, for example, 1500 kW in a case where the rated power of each of the first generator 11, the second generator 12, and the third generator 13 is 1000 kW. That is, the secondary battery 14 is a comparatively large-capacity secondary battery, and can output power as much as each of the first generator 11, the second generator 12, and third generator 13. Specifically, it is preferable that the secondary battery 14 can output power equal to or greater than 90% and equal to or less than 120% of the rated output of each of the generators. An upper limit of the capacity of the secondary battery 14 is decided in view of the cycle characteristic of the secondary battery 14. For example, the upper limit of the capacity of the secondary battery 14 is decided such that power equal to or greater than 90% of the rated power of the third generator 13 can be output from the first generator 11 even though the capacity of the secondary battery 14 is deteriorated to 80%. For this reason, the secondary battery 14 can be used instead of the first generator 11, the second generator 12, and the third generator 13.

The control device 20 controls the first generator 11, the second generator 12, the third generator 13, and the secondary battery 14. Specifically, the control device 20 expands and executes a program stored in a storage device (not shown), thereby controlling the first generator 11, the second generator 12, the third generator 13, and the secondary battery 14. The control device 20 can be implemented by an electronic circuit including a central processing unit (CPU), or the like.

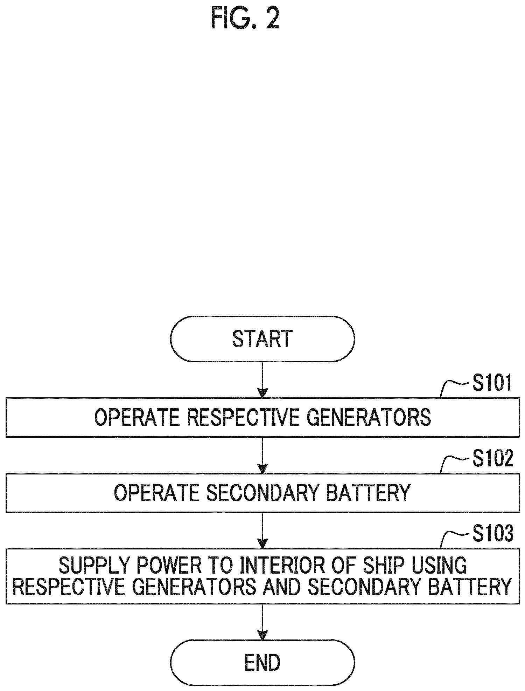

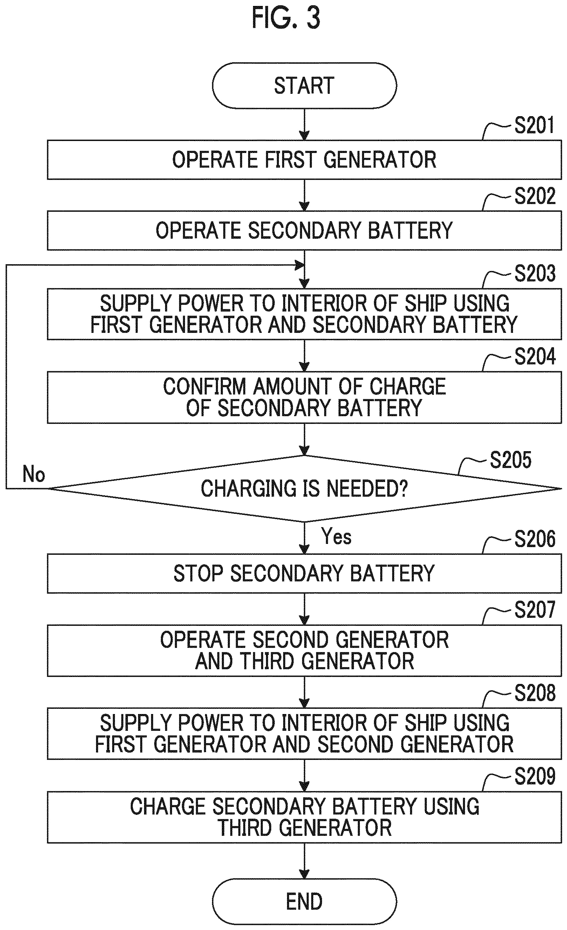

Next, the operation of the power generation system 1 shown in Fig. 1 will be described referring to Figs. 2 and 3. Fig. 2 is a flowchart showing the operation of the power generation system 1 during entry and departure of the ship. Fig. 3 is a flowchart showing the operation of the power generation system 1 during normal sailing of the ship. In the following description, although an example where power needed during entry and departure of the ship is 4500 kW, and power needed during normal sailing is 1800 kW will be described, the invention is not limited thereto.

First, the operation of the power generation system 1 during entry and departure of the ship will be described in connection with Fig. 2. The control device 20 operates the first generator 11, the second generator 12, and the third generator 13 (Step S101). Here, the control device 20 operates the first generator 11, the second generator 12, and the third generator 13 with the rated output. It is assumed that the rated power of each of the first generator 11, the second generator 12, and the third generator 13 is 1000 kW. That is, the control device 20 makes the first generator 11, the second generator 12, and the third generator 13 output power of 3000 kW. Then, the control device 20 progresses to Step S102.

The control device 20 operates the secondary battery 14 (Step S102). Here, the secondary battery 14 is charged so as to enable output of power as much as each of the first generator 11, the second generator 12, and the third generator 13 during normal sailing. Specifically, the control device 20 makes the secondary battery 14 output power of 1500 kW. Then, the control device 20 progresses to Step S103.

The control device 20 supplies power of 4500 kW to the interior of the ship using the first generator 11, the second generator 12, the third generator 13, and the secondary battery 14 (Step S103).

Next, the operation of the power generation system 1 during normal sailing of the ship will be described in connection with Fig. 3.

First, the control device 20 operates the first generator 11 (Step S201). Here, the control device 20 operates, for example, the first generator 11 under a high load (for example, 90% of the rated output), and makes the second generator 12 and the third generator 13 on standby. Specifically, in a case where the rated power of the first generator is 1000 kW, the control device 20 makes the first generator 11 output power of 900 kW. Then, the control device 20 progresses to Step S202.

The control device 20 operates the secondary battery 14 (Step S202). Here, the control device 20 makes power needed in the interior of the ship be output. For example, since power needed in the interior of the ship is 1800 kW, and the first generator 11 outputs power of 900 kW, the control device 20 makes the secondary battery 14 output insufficient power of 900 kW. Then, the control device 20 progresses to Step S203.

The control device 20 supplies power of 1800 kW to the interior of the ship using the first generator 11 and the secondary battery 14 (Step S203). Then, the control device 20 progresses to Step S204.

Next, the control device 20 confirms an amount of charge of the secondary battery 14 (Step S204). Then, the control device 20 progresses to Step S205.

In a case where the secondary battery 14 does not need charging (in Step S205, "No"), the control device 20 returns to Step S203. That is, in a case where the amount of charge of the secondary battery 14 is sufficient, power is continued to be supplied to the interior of the ship using the first generator 11 and the secondary battery 14. On the other hand, in a case where the secondary battery 14 needs charging (in Step S205, "Yes"), the control device 20 progresses to Step S206. A case where the secondary battery 14 needs charging means, for example, a case where power equivalent to that of each of the generators cannot be output during entry and departure.

The control device 20 stops the secondary battery (Step S206). Then, the control device 20 progresses to Step S207.

The control device 20 operates the second generator 12 and the third generator 13 (Step S207). Here, the control device 20 operates the second generator 12 and the third generator 13 under a high load (for example, 90% of the rated power). Specifically, in a case where the rated power of each of the second generator 12 and the third generator 13 is 1000 kW, the control device 20 makes the second generator 12 and the third generator 13 output power of 900 kW. That is, the control device 20 operates the three generators of the first generator 11, the second generator 12, and the third generator 13 under a high load. Then, the control device 20 progresses to Step S208.

The control device 20 supplies power of 1800 kW needed in the interior of the ship using the first generator 11 and the second generator 12 (Step S208). Then, the control device 20 progresses to Step S209.

The control device 20 charges the secondary battery 14 using the third generator 13 (Step S209). Here, the control device 20 charges the secondary battery 14 using the third generator 13 such that the ship can secure power needed during entry and departure. Specifically, in a case where the rated power of each of the first generator 11, the second generator 12, and the third generator 13 is 1000 kW, the secondary battery 14 is charged so as to enable output of power of 1500 kW. Since the first generator 11, the second generator 12, and the third generator 13 have the same rated output, the first generator 11, the second generator 12, and the third generator 13 are operated in a rotating manner such that an operation rate becomes the same.

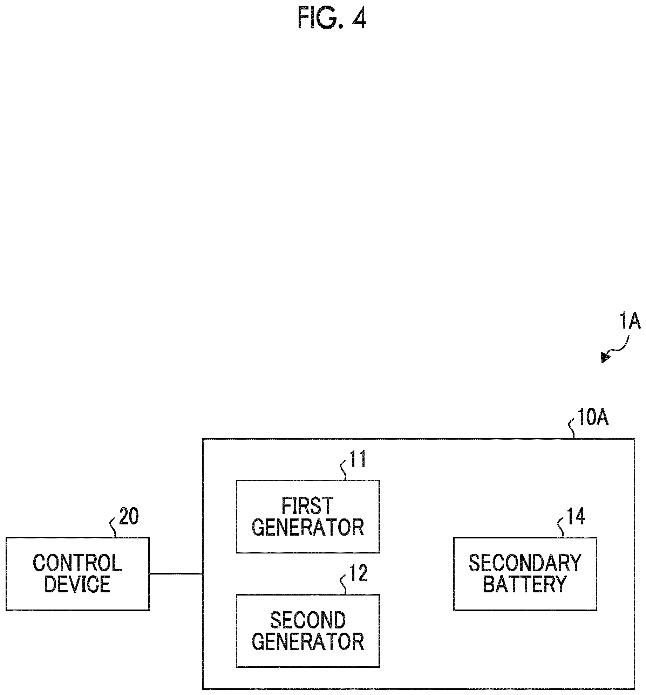

Next, a modification example of the power generation system 1 according to the first embodiment will be described referring to Fig. 4. Fig. 4 is a block diagram showing the configuration of a power generation system 1A according to a modification example of the first embodiment.

As shown in Fig. 4, the power generation system 1A includes a main generator 10A and a control device 20. The main generator 10A has a first generator 11, a second generator 12, and a secondary battery 14. That is, the power generation system 1A is different from the power generation system 1 in that power is supplied to a ship using the two generators and the secondary battery. In this case, it is assumed that the rated output of each of the first generator 11 and the second generator 12 is 1500 kW in a case where power needed during entry and departure of the ship is 4500 kW.

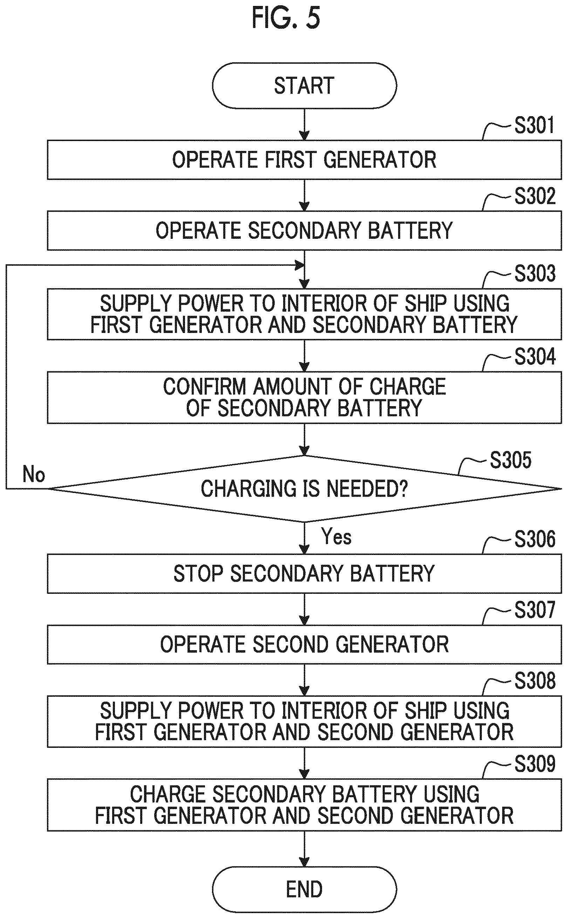

Next, the operation of the power generation system 1A shown in Fig. 4 will be described referring to Fig. 5. Fig. 5 is a flowchart showing the operation of the power generation system 1A during normal sailing of the ship. The operation during entry and departure is the same as in the power generation system 1, and thus, description thereof will not be repeated. In the following description, an example where power needed during entry and departure of the ship is 4500 kW, and power needed during normal sailing is 1800 kW will be described.

The control device 20 operates the first generator 11 (Step S301). Here, the control device 20 operates, for example, the first generator 11 under a high load (for example, 90% of the rated power), and makes the second generator 12 on standby. Specifically, in a case where the rated power of the first generator is 1500 kW, the control device 20 makes the first generator 11 output power of 1350 kW. Then, the control device 20 progresses to Step S302.

The control device 20 operates the secondary battery 14 (Step S302). Here, the control device 20 makes power needed in the interior of the ship be output. For example, since power needed in the interior of the ship is 1800 kW, and the first generator 11 outputs power of 1350 kW, the control device 20 makes the secondary battery 14 output insufficient power of 450 kW. Then, the control device 20 progresses to Step S303.

The control device 20 supplies power of 1800 kW to the interior of the ship using the first generator 11 and the secondary battery 14 (Step S303). Then, the control device 20 progresses to Step S304.

Next, the control device 20 confirms an amount of charge of the secondary battery 14(Step S304). Then, the control device 20 progresses to Step S305.

In a case where the secondary battery 14 does not need charging (in Step S305, "No"), the control device 20 returns to Step S303. On the other hand, in a case where the secondary battery 14 needs charging (in Step S305, "Yes"), the control device 20 progresses to Step S306.

The control device 20 stops the secondary battery 14 (Step S306). Then, the control device 20 progresses to Step S307.

The control device 20 operates the second generator 12 (Step S307). Here, the control device 20 operates, for example, the second generator 12 under a high load (for example, 90% of the rated power). Specifically, in a case where the rated power of the second generator 12 is 1500 kW, the control device 20 makes the second generator 12 output power of 1350 kW. That is, the control device 20 operates the first generator 11 and the second generator 12 under a high load. Then, the control device 20 progresses to Step S308.

The control device 20 supplies power of 1800 kW needed in the interior of the ship using the first generator 11 and the second generator 12 (Step S308). Then, the control device 20 progresses to Step S309.

The control device 20 charges the secondary battery 14 using the first generator 11 and the second generator 12 (Step S309). Here, the secondary battery 14 is charged using surplus power out of power supplied from the first generator 11 and the second generator 12 to the interior of the ship such that the ship can secure power needed during entry and departure. Specifically, since power needed in the interior of the ship is 1800 kW, and the first generator 11 and the second generator 12 output power of 2700 kW in total, the control device 20 charges the secondary battery 14 using surplus power of 900 kW.

As described above, in the embodiment, since the use of the secondary battery enables reduction in the rated output of each of the generators compared to the related art, during normal sailing, it is possible to constantly operate the respective generators under a high load. Accordingly, in the embodiment, it is possible to suppress deterioration of the fuel efficiency of the power generation system during normal sailing of the ship.

In the embodiment, although the main engine is powered by a diesel engine, the main engine may be powered electrically. In a case where the main engine is powered through electric drive, a plurality of generators are further mounted, whereby the embodiment can be applied. With this, even though the main engine is electrically driven, it is possible to operate the respective generators under a high load while providing power using the secondary battery. Accordingly, even though the main engine is electrically driven, it is possible to suppress deterioration of fuel efficiency.

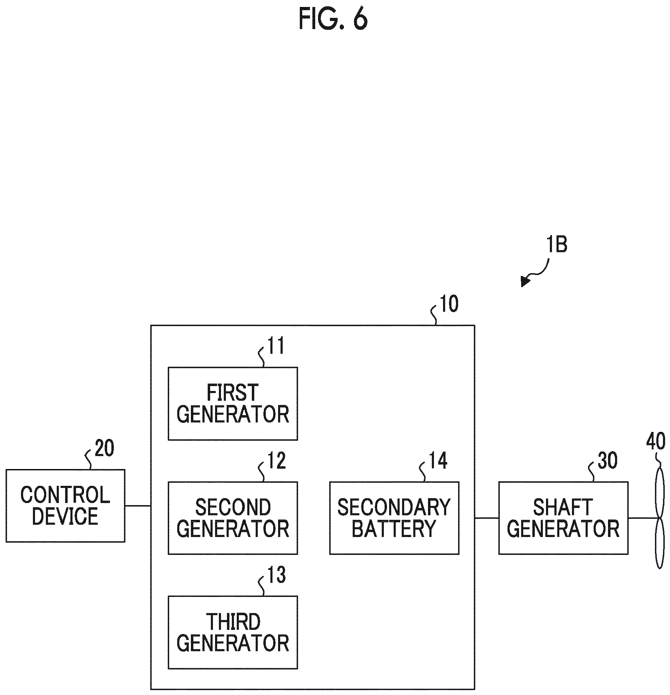

A power generation system 1B according to a second embodiment of the invention will be described in connection with Fig. 6. Fig. 6 is a block diagram showing the configuration of the power generation system 1B according to the second embodiment of the invention.

As shown in Fig. 6, the power generation system 1B includes a main generator 10, a control device 20, a shaft generator 30, and a propeller 40.

The shaft generator 30 is a rotary generator provided in a rotary shaft of propulsion equipment. Specifically, the shaft generator 30 generates power using rotation of a shaft for transmitting power of a main engine to the propeller 40. The shaft generator 30 supplies generated power to the interior of the ship or charges the secondary battery 14 using generated power during normal sailing of the ship. The shaft generator 30 does not normally supply power to the interior of the ship and does not charge the secondary battery 14 during entry and departure. In a case where power to be supplied to the interior of the ship is insufficient, or the like, the shaft generator 30 may supply power to the interior of the ship.

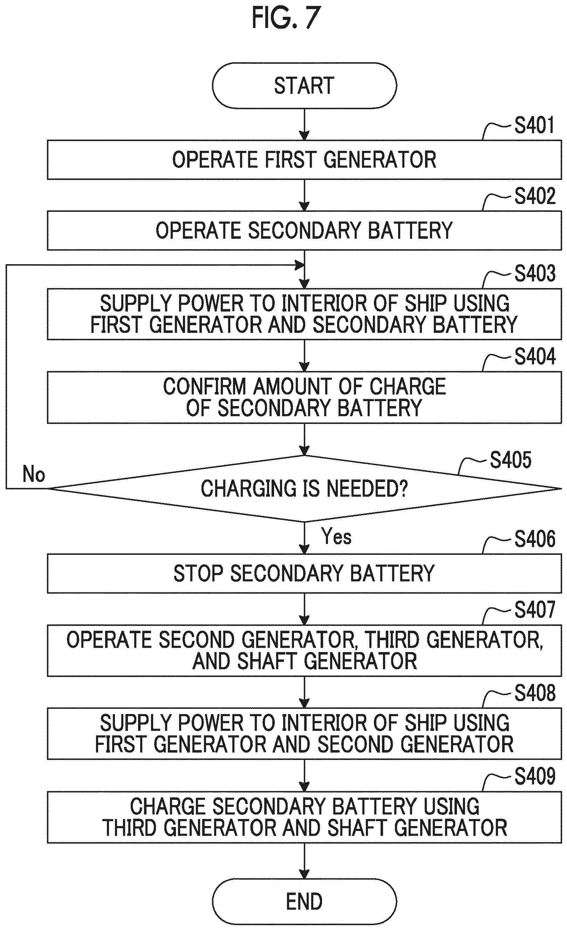

Next, the operation of the power generation system 1B shown in Fig. 6 will be described referring to Fig. 7. Fig. 7 is a flowchart showing the operation of the power generation system 1B during normal sailing of the ship. The operation shown in Fig. 7 is an operation to supply power to the interior of the ship using the first generator 11 and the second generator 12, and to charge the secondary battery 14 using the third generator 13 and the shaft generator 30 in a case where the secondary battery 14 needs charging. The operation during entry and departure is the same as in the power generation system 1, and thus, description thereof will not be repeated. In the following description, an example where power needed during entry and departure of the ship is 4500 kW, and power needed during normal sailing is 1800 kW will be described.

First, the control device 20 operates the first generator 11 (Step S401). Here, the control device 20 operates, for example, the first generator 11 under a high load (for example, 90% of the rated output), and makes the second generator 12 and the third generator 13 on standby. Then, the control device 20 progresses to Step S402.

The control device 20 operates the secondary battery 14 (Step S402). Here, the control device 20 makes power needed in the interior of the ship be output. Then, the control device 20 progresses to Step S403.

The control device 20 supplies power of 1800 kW to the interior of the ship using the first generator 11 and the secondary battery 14 (Step S403). Here, the control device 20 may supply power to the interior of the ship using the shaft generator 30. Then, the control device 20 progresses to Step S404.

Next, the control device 20 confirms an amount of charge of the secondary battery 14 (Step S404). Then, the control device 20 progresses to Step S405.

In a case where the secondary battery 14 does not need charging (in Step S405, "No"), the control device 20 returns to Step S403. On the other hand, in a case where the secondary battery 14 needs charging (in Step S405, "Yes"), the control device 20 progresses to Step S406. A case where the secondary battery 14 needs charging means, for example, a case where power equivalent to that of each of the generators cannot be output during entry and departure.

The control device 20 stops the secondary battery (Step S406). Then, the control device 20 progresses to Step S407.

The control device 20 operates the second generator 12, the third generator 13, and the shaft generator 30 (Step S407) . Here, the control device 20 makes the second generator 12 output power needed in the interior of the ship. Then, the control device 20 progresses to Step S408.

The control device 20 supplies power of 1800 kW needed in the interior of the ship using the first generator 11 and the second generator 12 (Step S408). Then, the control device 20 progresses to Step S409.

The control device 20 charges the secondary battery 14 using the third generator 13 and the shaft generator 30 (Step S409). Here, the control device 20 charges the secondary battery 14 using the third generator 13 and the shaft generator 30 such that the ship can secure power needed during entry and departure. In a case where the secondary battery 14 can be sufficiently charged only using the third generator 13 or the shaft generator 30, the control device 20 may operate only one of the third generator 13 and the shaft generator 30 in Step S407.

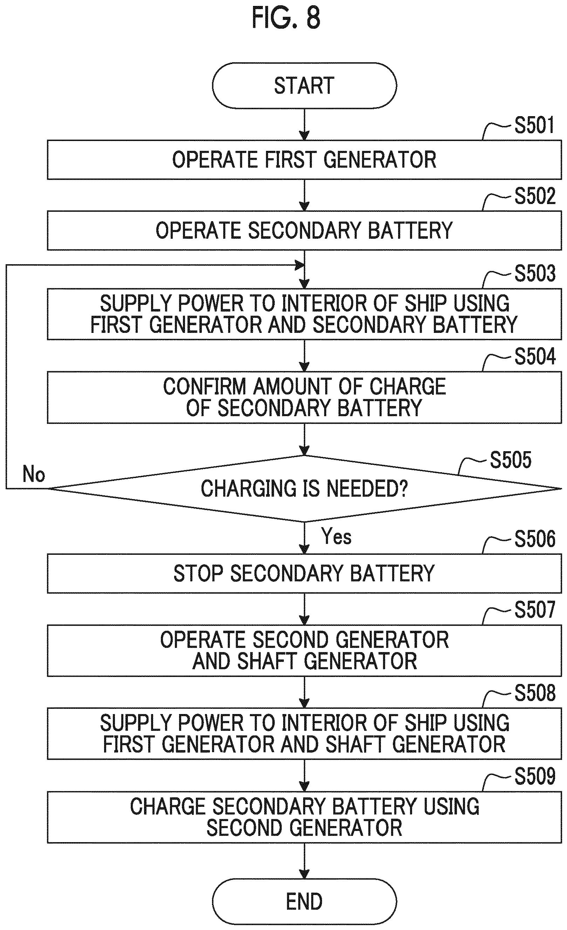

Next, an operation of the power generation system 1B shown in Fig. 6 different from Fig. 7 will be described referring to Fig. 8. Fig. 8 is a flowchart showing an operation of the power generation system 1B different from Fig. 7 during normal sailing of the ship. Specifically, the operation shown in Fig. 8 is an operation to supply power to the interior of the ship using the first generator 11 and the shaft generator 30 and charge the secondary battery 14 using the second generator 12 in a case where the secondary battery 14 needs charging.

Steps S501 to S506 are the same as Steps S401 to S406 shown in Fig. 7, and thus, description thereof will not be repeated.

The control device 20 operates the second generator 12 and the shaft generator 30 (Step S507). Here, the control device 20 makes the shaft generator 30 output power needed in the interior of the ship. For example, since power needed in the interior of the ship is 1800 kW, and the first generator 11 outputs power of 900 kW, the control device 20 makes shaft generator 30 output insufficient power of 900 kW. In the processing of Fig. 8, the third generator 13 is brought into a standby state.

The control device 20 supplies power of 1800 kW needed in the interior of the ship using the first generator 11 and the shaft generator 30 (Step S508). Then, the control device 20 progresses to Step S509.

The control device 20 charges the secondary battery 14 using the second generator 12 (Step S509). Here, the control device 20 charges the secondary battery 14 using the second generator 12 such that the ship can secure power needed during entry and departure. Specifically, in a case where the rated power of each of the first generator 11, the second generator 12, and the third generator 13 is 1000 kW, the secondary battery 14 is charged so as to enable output of power of 1500 kW.

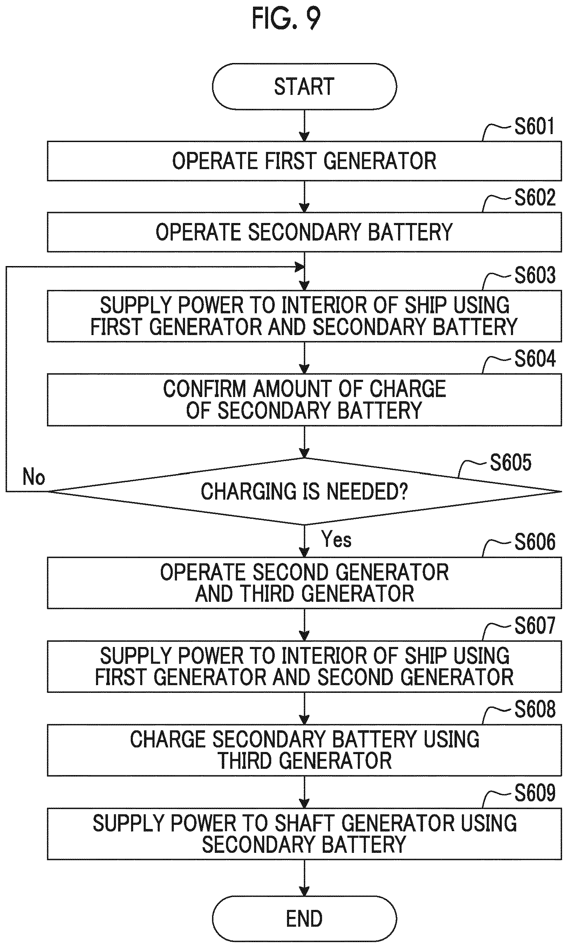

Next, an operation of the power generation system 1B shown in Fig. 6 different from Figs. 7 and 8 will be described referring to Fig. 9. Fig. 9 is a flowchart showing an operation of the power generation system 1B during normal sailing of the ship different from Figs. 7 and 8. Specifically, the operation shown in Fig. 9 is an operation to supply power to the interior of the ship using the first generator 11 and the second generator 12, to charge the secondary battery 14 using the third generator 13, and to support the rotation of the propeller 40 using the secondary battery 14.

Steps S601 to S605 are the same as Steps S401 to S405 shown in Fig. 7, and thus, description thereof will not be repeated.

The control device 20 operates the second generator 12 and the third generator 13 (Step S606). Here, the control device 20 operates the second generator 12 and the third generator 13 under a high load (for example, 90% of the rated power). Specifically, in a case where the rated power of each of the second generator 12 and the third generator 13 is 1000 kW, the control device 20 makes the second generator 12 and the third generator 13 output power of 900 kW. That is, the control device 20 operates the three generators of the first generator 11, the second generator 12, and the third generator 13 under a high load. Then, the control device 20 progresses to Step S607.

The control device 20 supplies power of 1800 kW needed in the interior of the ship using the first generator 11 and the second generator 12 (Step S607). Then, the control device 20 progresses to Step S608.

The control device 20 charges the secondary battery 14 using the third generator 13 (Step S608). Here, the control device 20 charges the secondary battery 14 to such an extent as to support the rotation of the propeller 40. Here, in a case the secondary battery 14 is charged with power sufficient for supporting the shaft generator 30, the control device 20 may skip Step S608. Then, the control device 20 progresses to Step S609.

The control device 20 supplies power to the shaft generator 30 using the secondary battery 14 (Step S609). With this, power is supplied from the shaft generator 30 to rotational power of the propeller 40, and the rotation of the propeller 40 is supported.

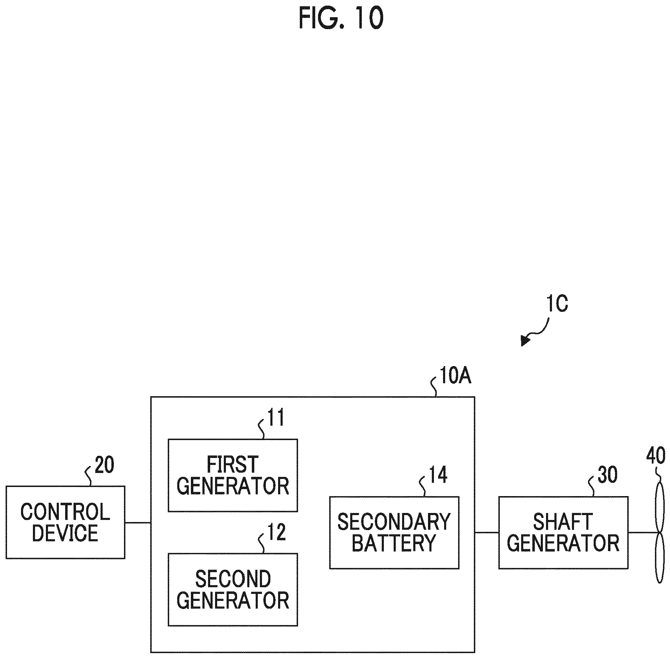

Next, a modification example of the power generation system 1B according to the second embodiment will be described referring to Fig. 10. Fig. 10 is a block diagram showing the configuration of a power generation system 1C according to a modification example of the second embodiment.

As shown in Fig. 10, the power generation system 1C includes a main generator 10A, a control device 20, a shaft generator 30, and a propeller 40. The main generator 10A has a first generator 11, a second generator 12, and a secondary battery 14. That is, the power generation system 1C is different from the power generation system 1B in that power is supplied to the ship using the two generators and the secondary battery. In a case where the secondary battery 14 needs charging, an operation to supply power to the interior of the ship using the first generator 11 and the shaft generator 30 and to charge the secondary battery 14 using the second generator 12 is the same as the operation shown in Fig. 8 excluding that the third generator 13 is made on standby, and thus, description thereof will not be repeated.

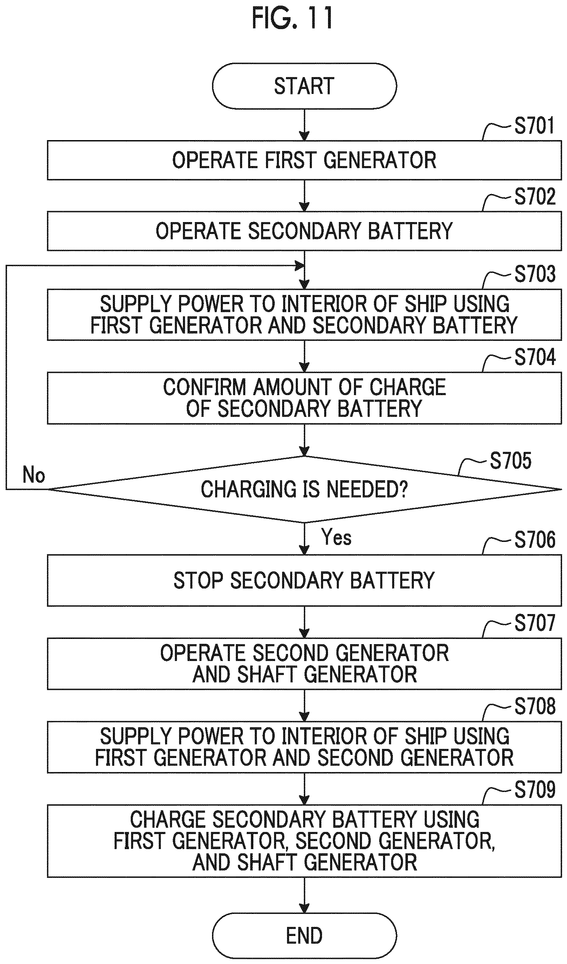

The operation of the power generation system 1C shown in Fig. 10 will be described referring to Fig. 11. Fig. 11 is a flowchart showing the operation of the power generation system 1C during normal sailing of the ship.

Steps S701 to S706 are the same as Steps S301 to S306 shown in Fig. 5, and thus, description thereof will not be repeated.

The control device 20 operates the second generator 12 and the shaft generator 30 (Step S707). Here, the control device 20 operates, for example, the second generator 12 under a high load (for example, 90% of the rated power) . Specifically, in a case where the rated power of the second generator 12 is 1500 kW, the control device 20 makes the second generator 12 output power of 1350 kW. That is, the control device 20 operates the first generator 11 and the second generator 12 under a high load. The control device 20 operates the shaft generator 30 so as to enable charging of the secondary battery 14. Then, the control device 20 progresses to Step S708.

The control device 20 supplies power of 1800 kW needed in the interior of the ship using the first generator 11 and the second generator 12 (Step S708). Then, the control device 20 progresses to Step S709.

The control device 20 charges the secondary battery 14 using the first generator 11, the second generator 12, and the shaft generator 30 (Step S709). Here, the secondary battery 14 is charged using surplus power out of power supplied from the first generator 11 and the second generator 12 to the interior of the ship and power output from the shaft generator 30 such that the ship can secure power needed during entry and departure. Specifically, since power needed in the interior of the ship is 1800 kW, and the first generator 11 and the second generator 12 output power of 2700 kW in total, the control device 20 charges the secondary battery 14 using surplus power of 900 kW. In a case where the secondary battery can be sufficiently charge using the first generator 11 and the second generator 12, the control device 20 may not operate the shaft generator 30 in Step S707.

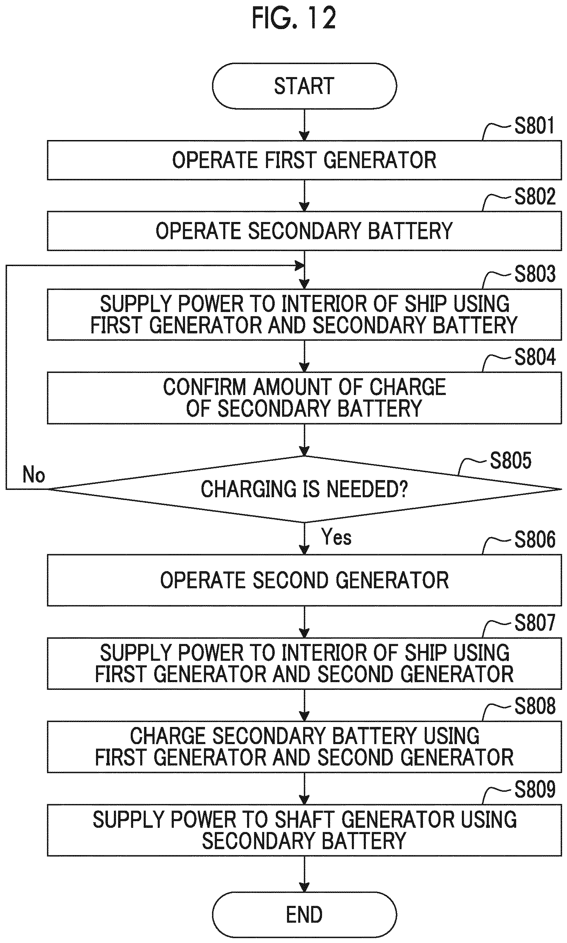

Next, an operation of the power generation system 1C shown in Fig. 10 different from Fig. 11 will be described referring to Fig. 12.

Steps S801 to S805 are the same as Steps S301 to S305 shown in Fig. 5, and thus, description thereof will not be repeated.

The control device 20 operates the second generator 12 (Step S806). Here, the control device 20 operates, for example, the second generator 12 under a high load (for example, 90% of the rated power). Specifically, in a case where the rated power of the second generator 12 is 1500 kW, the control device 20 makes the second generator 12 output power of 1350 kW. That is, the control device 20 operates the first generator 11 and the second generator 12 under a high load. Then, the control device 20 progresses to Step S807.

The control device 20 supplies power of 1800 kW needed in the interior of the ship using the first generator 11 and the second generator 12 (Step S807). Then, the control device 20 progresses to Step S808.

The control device 20 charges the secondary battery 14 using the first generator 11 and the second generator 12 (Step S808). Here, the secondary battery 14 is charged using surplus power out of power supplied from the first generator 11 and the second generator 12 to the interior of the ship such that the ship can secure needed during entry and departure. Specifically, since power needed in the interior of the ship is 1800 kW, and the first generator 11 and the second generator 12 output power of 2700 kW in total, the control device 20 charges the secondary battery 14 using surplus power of 900 kW. Then, the control device 20 progresses to Step S809.

The control device 20 supplies power to the shaft generator 30 using the secondary battery 14 (Step S809). The control device 20 may skip Step S809.

As described above, in the embodiment, since the use of the secondary battery enables reduction in the rated output of each of the generators compared to the related art, during normal sailing, it is possible to constantly operate the respective generators under a high load. Accordingly, in the embodiment, it is possible to suppress deterioration of the fuel efficiency of the power generation system during normal sailing of the ship.

In the embodiment, during normal sailing, it is possible to supply power to the interior of the ship or to charge the secondary battery using the respective generators and the shaft generator. In the embodiment, it is possible to further suppress deterioration of the fuel efficiency of the power generation system during normal sailing of the ship. In the embodiment, it is possible to reduce the fuel consumption of the main engine.

### Reference Signs List

1, 1A, 1B, 1C: power generation system
10, 10A: main generator
11: first generator
12: second generator
13: third generator
14: secondary battery
30: shaft generator
40: propeller

## Claims

1. A power generation system (1B, 1C) for ships needing a maximum power for a bow thruster during entry and departure, comprising:
a plurality of generators (11, 12, 13) that supply power to an interior of a ship;
a secondary battery (14) that stores power output from the plurality of generators (11, 12, 13) and supplies the stored power to the interior of the ship;
a control device that, during normal sailing of the ship, causes a first generator (11) among the plurality of generators (11, 12, 13) and the secondary battery (14) to supply power to the interior of the ship, and causes the secondary battery (14) to charge so as to enable output power equivalent to that of the first generator (11) during entry and departure, and
a shaft generator (30) provided in a rotary shaft of propulsion equipment of the ship, wherein
the propulsion equipment is a main engine of the ship, and the rotary shaft transmits power of the main engine to a propeller (40).

2. The power generation system (1B, 1C) for ships according to claim 1,
wherein the secondary battery (14) has capacity equal to or greater than 90% and equal to or less than 120% of a rated power of the first generator (11).

3. The power generation system (1B) for ships according to claim 1 or 2,
wherein, during normal sailing of the ship, the control device causes the first generator (11) and a second generator (12) among the plurality of generators (11, 12, 13) to supply power to the interior of the ship and causes a third generator (13) among the plurality of generators (11, 12, 13) and the shaft generator (30) to charge the secondary battery.

4. The power generation system (1B) for ships according to claim 1 or 2,
wherein, during normal sailing of the ship, the control device causes the first generator (11) and the shaft generator (30) to supply power to the interior of the ship, and causes a second generator (12) among the plurality of generators (11, 12, 13) to charge the secondary battery (14).

5. The power generation system (1B) for ships according to claim 1 or 2,
wherein, during normal sailing of the ship, the control device causes the first generator (11) and a second generator (12) among the plurality of generators (11, 12, 13) to supply power to the interior of the ship, causes a third generator (13) among the plurality of generators (11, 12, 13) to charge the secondary battery (14), and causes the secondary battery (14) to supply power to the shaft generator (30).

6. The power generation system (1C) for ships according to claim 1 or 2,
wherein, during normal sailing of the ship, the control device causes the first generator (11) and a second generator (12) among the plurality of generators (11, 12) to supply power to the interior of the ship, and causes surplus power out of power supplied to the interior of the ship and the shaft generator (30) to charge the secondary battery (14).

7. The power generation system (1C) for ships according to claim 1 or 2,
wherein, during normal sailing of the ship, the control device causes the first generator (11) and a second generator (12) among the plurality of generators (11, 12) to supply power to the interior of the ship, causes surplus power out of power supplied to the interior of the ship to charge the secondary battery (14), and causes the secondary battery (14) to supply power to the shaft generator (30).

8. The power generation system (1B) for ships according to claim 1, wherein
the ships further comprise a bow thruster.

## Patentansprüche

1. Ein Energieerzeugungssystem (1B, 1C) für Schiffe, die während eines Einlaufens und Auslaufens eine maximale Energie für ein Bugstrahlruder benötigen, aufweisend:
eine Vielzahl von Generatoren (11, 12, 13), die das Innere eines Schiffes mit Energie versorgen;
eine Sekundärbatterie (14), die eine von der Vielzahl von Generatoren (11, 12, 13) ausgegebene Energie speichert und das Innere des Schiffes mit der gespeicherten Energie versorgt;
eine Steuervorrichtung, die während der normalen Fahrt des Schiffes bewirkt, dass ein erster Generator (11) aus der Vielzahl von Generatoren (11, 12, 13) und die Sekundärbatterie (14) das Innere des Schiffes mit Energie versorgen, und die bewirkt, dass die Sekundärbatterie (14) geladen wird, um eine Ausgabeenergie zu ermöglichen, die äquivalent zu der des ersten Generators (11) während des Einlaufens und Auslaufens ist, und
einen Wellengenerator (30), der in einer Drehwelle einer Antriebsausrüstung des Schiffes vorgesehen ist, wobei
die Antriebsausrüstung eine Hauptmaschine des Schiffes ist, und die Drehwelle eine Energie der Hauptmaschine auf einen Propeller (40) überträgt.

2. Das Energieerzeugungssystem (1B, 1C) für Schiffe nach Anspruch 1,
wobei die Sekundärbatterie (14) eine Kapazität aufweist, die gleich oder größer als 90% und gleich oder kleiner als 120% einer Nennenergie des ersten Generators (11) ist.

3. Das Energieerzeugungssystem (1B) für Schiffe nach Anspruch 1 oder 2,
wobei während der normalen Fahrt des Schiffes die Steuervorrichtung bewirkt, dass der erste Generator (11) und ein zweiter Generator (12) aus der Vielzahl von Generatoren (11, 12, 13) das Innere des Schiffes mit Energie versorgen, und die bewirkt, dass ein dritter Generator (13) aus der Vielzahl von Generatoren (11, 12, 13) und der Wellengenerator (30) die Sekundärbatterie laden.

4. Das Energieerzeugungssystem (1B) für Schiffe nach Anspruch 1 oder 2,
wobei während der normalen Fahrt des Schiffes die Steuervorrichtung bewirkt, dass der erste Generator (11) und der Wellengenerator (30) das Innere des Schiffes mit Energie versorgen, und die bewirkt, dass ein zweiter Generator (12) aus der Vielzahl von Generatoren (11, 12, 13) die Sekundärbatterie (14) lädt.

5. Das Energieerzeugungssystem (1B) für Schiffe nach Anspruch 1 oder 2,
wobei während der normalen Fahrt des Schiffes die Steuervorrichtung bewirkt, dass der erste Generator (11) und ein zweiter Generator (12) aus der Vielzahl von Generatoren (11, 12, 13) das Innere des Schiffes mit Energie versorgen, die bewirkt, dass ein dritter Generator (13) aus der Vielzahl von Generatoren (11, 12, 13) die Sekundärbatterie (14) lädt, und die bewirkt, dass die Sekundärbatterie (14) den Wellengenerator (30) mit Energie versorgt.

6. Das Energieerzeugungssystem (1C) für Schiffe nach Anspruch 1 oder 2,
wobei während der normalen Fahrt des Schiffes die Steuervorrichtung bewirkt, dass der erste Generator (11) und ein zweiter Generator (12) aus der Vielzahl der Generatoren (11, 12) das Innere des Schiffes mit Energie versorgen, und die bewirkt, dass überschüssige Energie aus der dem Inneren des Schiffes zugeführten Energie und dem Wellengenerator (30) die Sekundärbatterie (14) lädt.

7. Das Energieerzeugungssystem (1C) für Schiffe nach Anspruch 1 oder 2,
wobei während der normalen Fahrt des Schiffes die Steuervorrichtung bewirkt, dass der erste Generator (11) und ein zweiter Generator (12) aus der Vielzahl von Generatoren (11, 12) das Innere des Schiffes mit Energie versorgen, die bewirkt, dass überschüssige Energie aus der dem Inneren des Schiffes zugeführten Energie die Sekundärbatterie (14) lädt, und die bewirkt, dass die Sekundärbatterie (14) den Wellengenerator (30) mit Energie versorgt.

8. Das Energieerzeugungssystem (1B) für Schiffe nach Anspruch 1, wobei
die Schiffe ferner ein Bugstrahlruder aufweisen.

## Revendications

1. Système de génération d'énergie (1B, 1C) pour navires nécessitant un maximum d'énergie pour un propulseur d'étrave lors de l'arrivée et du départ, comprenant :
une pluralité de générateurs (11, 12, 13) qui alimentent en énergie un intérieur d'un navire ;
une batterie rechargeable (14) qui stocke une énergie délivrée en sortie de la pluralité de générateurs (11, 12, 13) et alimente, avec l'énergie stockée, l'intérieur du navire ;
un dispositif de commande qui, pendant une navigation normale du navire, amène un premier générateur (11) parmi la pluralité de générateurs (11, 12, 13) et la batterie rechargeable (14) à alimenter en énergie l'intérieur du navire, et amène la batterie rechargeable (14) à se charger de façon à assurer une énergie de sortie équivalente à celle du premier générateur (11) lors de l'arrivée et du départ, et
un générateur d'arbre (30) ménagé dans un arbre rotatif d'un équipement de propulsion du navire, dans lequel
l'équipement de propulsion est un moteur principal du navire, et l'arbre rotatif transmet une énergie du moteur principal à une hélice (40).

2. Système de génération d'énergie (1B, 1C) pour navires selon la revendication 1,
dans lequel la batterie rechargeable (14) possède une capacité égale ou supérieure à 90% et égale ou inférieure à 120% d'une énergie nominale du premier générateur (11).

3. Système de génération d'énergie (1B) pour navires selon la revendication 1 ou 2,
dans lequel, pendant une navigation normale du navire, le dispositif de commande amène le premier générateur (11) et un deuxième générateur (12) parmi la pluralité de générateurs (11, 12, 13) à alimenter en énergie l'intérieur du navire et amène un troisième générateur (13) parmi la pluralité de générateurs (11, 12, 13) et le générateur d'arbre (30) à charger la batterie rechargeable.

4. Système de génération d'énergie (1B) pour navires selon la revendication 1 ou 2,
dans lequel, pendant une navigation normale du navire, le dispositif de commande amène le premier générateur (11) et le générateur d'arbre (30) à alimenter en énergie l'intérieur du navire, et amène un deuxième générateur (12) parmi la pluralité de générateurs (11, 12, 13) à charger la batterie rechargeable (14).

5. Système de génération d'énergie (1B) pour navires selon la revendication 1 ou 2,
dans lequel, pendant une navigation normale du navire, le dispositif de commande amène le premier générateur (11) et un deuxième générateur (12) parmi la pluralité de générateurs (11, 12, 13) à alimenter en énergie l'intérieur du navire, amène un troisième générateur (13) parmi la pluralité de générateurs (11, 12, 13) à charger la batterie rechargeable (14), et amène la batterie rechargeable (14) à alimenter en énergie le générateur d'arbre (30).

6. Système de génération d'énergie (1C) pour navires selon la revendication 1 ou 2,
dans lequel, pendant une navigation normale du navire, le dispositif de commande amène le premier générateur (11) et un deuxième générateur (12) parmi la pluralité de générateurs (11, 12) à alimenter en énergie l'intérieur du navire et amène une énergie excédentaire issue d'une énergie alimentant l'intérieur du navire et le générateur d'arbre (30) à charger la batterie rechargeable (14).

7. Système de génération d'énergie (1C) pour navires selon la revendication 1 ou 2,
dans lequel, pendant une navigation normale du navire, le dispositif de commande amène le premier générateur (11) et un deuxième générateur (12) parmi la pluralité de générateurs (11, 12) à alimenter en énergie l'intérieur du navire, amène une énergie excédentaire issue d'une énergie alimentant l'intérieur du navire à charger la batterie rechargeable (14), et amène la batterie rechargeable (14) à alimenter en énergie le générateur d'arbre (30).

8. Système de génération d'énergie (1B) pour navires selon la revendication 1, dans lequel
les navires comprennent en outre un propulseur d'étrave.
